# FASCICULE DE BREVET EUROPEEN

(11) **EP 3 807 226 B1**
(45) Date de publication et mention de la délivrance du brevet: **10.08.2022**
(21) Numéro de dépôt: 19728702.2
(22) Date de dépôt: 06.06.2019
(51) Int. Cl.: C03C 17/36

(54) **MATERIAU COMPRENANT UN EMPILEMENT A PROPRIETES THERMIQUES ET ESTHETIQUES**
MATERIAL MIT EINEM STAPEL MIT THERMISCHEN UND ÄSTHETISCHEN EIGENSCHAFTEN
MATERIAL COMPRISING A STACK WITH THERMAL AND AESTHETIC PROPERTIES

(30) Priorité: 12.06.2018 FR 1870681
(43) Date de publication de la demande: 21.04.2021
(73) Titulaire: Saint-Gobain Glass France, 92400 Courbevoie (FR)
(72) Inventeur: ONGARELLO, Tommaso, 92350 LE PLESSISVILLE-ROBINSON (FR)
(74) Mandataire: Saint-Gobain Recherche
(86) Numéro de dépôt international: PCT/EP2019/064881
(87) Numéro de publication internationale: WO 2019/238542

(56) Documents cités:
- WO-A1-2009/145864
- WO-A1-2018/165645
- WO-A2-2015/077064
- US-A1- 2014 237 917

## Description

La présente invention concerne un matériau comprenant un substrat transparent sur la surface duquel est déposé un empilement de couches qui comprend lui-même une pluralité de couches fonctionnelles permettant d'agir sur le rayonnement solaire et/ou infrarouge susceptible de heurter ladite surface. Le matériau de l'invention est remarquable en ce qu'il possède de hautes performances thermiques ainsi qu'un aspect esthétique de surface brillant et de couleur neutre. L'invention a également trait à un vitrage comprenant un tel matériau.

Les accords et dispositifs légaux ayant pour objectif de réduire les impacts environnementaux des activités humaines se multiplient aux échelles régionales, nationales et internationales. Ces accords et dispositifs visent notamment à réduire la consommation d'énergie des infrastructures. Ils préconisent ou obligent en particulier l'équipement des bâtiments et des véhicules de transports de manière à réduire la consommation d'énergie de leurs moyens de climatisation et de chauffage.

Les surfaces vitrées constituent souvent la majorité des surfaces externes des bâtiments et véhicules de transport. Leur part ne cesse de croître pour répondre au besoin des usagers en matière d'éclairage par la lumière naturelle. Cependant, ces surfaces vitrées peuvent être des sources passives de chaleur notamment lors des périodes de fort ensoleillement, tout comme être dissipatrices de chaleur lors des périodes hivernales. En conséquence, les variations de températures à l'intérieur des bâtiments et véhicules équipés de ces surfaces vitrées peuvent être très importantes. Ces variations de températures peuvent provoquer des sensations d'inconfort et inciter à une utilisation importante des moyens de climatisation et de chauffage.

Pour ces raisons d'économie d'énergie et de confort, les surfaces vitrées doivent être fonctionnalisées afin d'agir sur les rayonnements solaires et/ou infrarouges incidents et de réduire les phénomènes « d'effet de serre ». La fonctionnalisation de ces surfaces est généralement réalisée par le dépôt sur lesdites surfaces d'un empilement de couches comprenant des couches fonctionnelles métalliques. Ces couches confèrent aux surfaces, ainsi qu'aux vitrages qui les comprennent, des fonctions dites « sélectives » permettant de diminuer la quantité d'énergie transmise au travers du vitrage vers l'intérieur sans préjudice pour la transmission lumineuse dans le spectre visible. La publication de la demande WO 2015/077064 A2 concerne une surface vitrée fonctionnalisée possédant trois couches fonctionnelles d'argent ayant des performances thermiques.

Les performances des surfaces vitrées fonctionnalisées et des vitrages qui comprennent ce surfaces sont évaluées généralement à l'aide de trois paramètres :
- le facteur solaire, g, défini comme le rapport de l'énergie totale transmise au travers de la surface vitrée ou du vitrage vers l'intérieur sur l'énergie solaire incidente ;
- la transmission lumineuse dans le spectre visible, TL, définie comme le rapport de la quantité de lumière incidente sur la quantité de lumière du spectre visible transmise au travers de la surface vitrée ou du vitrage ;
- la sélectivité, s, définie comme le rapport de la transmission lumineuse TL sur le facteur solaire g, soit TL/g.

Plus la sélectivité, s, d'une surface vitrée fonctionnalisée ou d'un vitrage qui comprend une surface vitrée fonctionnalisée est élevée, plus ses performances thermiques sont élevées, c'est-à-dire plus la quantité d'énergie transmise au travers du vitrage vers l'intérieur est faible, idéalement sans préjudice pour la transmission lumineuse dans le spectre visible. Selon la définition ci-dessus, une sélectivité élevée peut être obtenue par augmentation de la transmission lumineuse, TL, et/ou par diminution du facteur solaire, g.

La transmission lumineuse et le facteur solaire dépendent en particulier des épaisseurs des couches fonctionnelles métalliques que comprend l'empilement de couche déposé sur la surface du substrat transparent qui forme la surface vitrée. La transmission lumineuse et le facteur solaire varient contradictoirement avec les épaisseurs des couches fonctionnelles. Plus les couches fonctionnelles sont épaisses, plus la transmission lumineuse est faible mais plus le facteur solaire est élevé. Inversement, plus les couches fonctionnelles sont minces, plus le facteur solaire est faible mais plus la transmission lumineuse est élevée.

Les surfaces vitrées fonctionnalisées et les vitrages qui les comprennent, possèdent donc idéalement des fonctions telles que :
- la transmission lumineuse soit la plus élevée, au moins 45%, voire 50% ;
- le facteur solaire, g, d'au plus 30% ;
- la sélectivité, s, est égale ou supérieure à 1,5, voire 1,7.

Les surfaces vitrées peuvent également posséder une fonction esthétique pour les bâtiments et les véhicules de transport dans lesquels elles sont susceptibles d'être incorporées. Dans certaines applications, elles doivent présenter, en transmission, en réflexion extérieure et en réflexion intérieure, un aspect de surface brillant de couleur neutre, c'est-à-dire de préférence proche de la couleur grise dans la gamme chromatique bleu-vert. Les nuances de la couleur doivent idéalement peu varier selon l'angle d'observation. Cet aspect de surface est esthétiquement proche de celui d'un miroir.

Un tel aspect de surface est généralement obtenu lorsque les réflexions extérieures et intérieures de la surface vitrée est égale ou supérieure à 25% et lorsque les valeurs des deux paramètres a* et b* dans le système L*a*b* sont proches de zéro, idéalement compris entre -5 et 0. Les réflexions extérieures et intérieures dépendent en partie de l'épaisseur des couches fonctionnelles métalliques. Plus les couches fonctionnelles métalliques sont épaisses, plus la réflexion est élevée, et inversement.

Toutefois, dans les régions géographiques où le taux d'ensoleillement est important et où les bâtiments sont susceptibles de comprendre des surfaces vitrées avec un tel aspect de surface brillant de couleur neutre, une réflexion intérieure élevée peut être une source de désagréments esthétiques. En effet, les lumières artificielles utilisées à l'intérieur des bâtiments peuvent être réfléchies par le vitrage vers l'intérieur du bâtiment par un important effet de miroir. La visibilité de l'environnement extérieur au travers des surfaces vitrées peut alors être considérablement dégradée. Ce phénomène peut être davantage marqué au crépuscule lorsque que la luminosité extérieure diminue. Pour l'éviter, la réflexion lumineuse intérieure doit être de préférence inférieure à 23%.

Il a été constaté que toute augmentation de l'épaisseur des couches fonctionnelles métalliques provoque une diminution de la transmission lumineuse que l'augmentation simultanée du facteur solaire ne permet pas de compenser. Par conséquent, bien que la réflexion extérieure augmente lorsque l'épaisseur des couches fonctionnelles métalliques augmente, la sélectivité diminue de manière préjudiciable pour les performances thermiques. La surface vitrée fonctionnalisée ou le vitrage qui la comprend peut donc avoir un aspect de surface brillant mais des performances thermiques médiocres. D'autre part, l'augmentation des épaisseurs des couches fonctionnelles métalliques provoque également une augmentation de la réflexion intérieure préjudiciable pour le confort esthétique. En outre, cette simple augmentation des épaisseurs des couches fonctionnelles métalliques ne permet généralement pas d'obtenir une couleur neutre en réflexion extérieure, en réflexion intérieure et en transmission.

La présente invention résout ces problèmes. Elle concerne un matériau comprenant un substrat transparent sur au moins une surface duquel est déposé un empilement de couches comprenant , à partir du substrat, trois couches fonctionnelles métalliques, F1, F2 et F3, à base d'argent, d'épaisseurs physiques EF1, EF2 et EF3 respectivement, et quatre ensembles diélectriques de couches, E1, E2, E3 et E4 d'épaisseurs optiques sont EO1, EO2, EO3 et EO4 respectivement, chacune des couches fonctionnelles métalliques F1, F2 et F3 à base d'argent étant disposée respectivement entre les deux ensembles diélectriques de couches, E1 et E2, E2 et E3, et E3 et E4, ledit matériau étant caractérisé en ce que :
- le rapport de l'épaisseur physique EF1 de la couche fonctionnelle métallique F1 sur l'épaisseur physique EF2 de la couche fonctionnelle métallique F2 est compris entre 0,95 et 1,05 ;
- l'épaisseur de la couche physique EF3 de la couche fonctionnelle métallique F3 est supérieure aux épaisseurs physiques EF1 et EF2 des couches fonctionnelles F1 et F2 ;
- l'épaisseur optique EO2 de l'ensemble diélectrique de couches E2 est comprise entre 60 et 80nm ;
- l'épaisseur optique EO1 de l'ensemble diélectrique de couches E1 est comprise entre 200 et 250nm ;
- les épaisseurs optiques EO1, EO2, EO3 et EO4 sont telles que EO2 < EO4 < EO3 < EO1;
- l'ensemble diélectrique de couche E4 comprend au moins une couche absorbante du rayonnement infrarouge d'une épaisseur physique comprise entre 0,1nm et 5nm.

Dans la présente description, il fait usage des définitions et conventions suivantes.

La position du substrat peut être horizontale, verticale ou inclinée selon le choix retenu pour la mise en œuvre de l'invention. L'ordre d'énumération des couches ou des ensembles de couches est défini depuis le substrat en direction de la surface de l'empilement opposée au substrat. Ainsi, la couche fonctionnelle métallique F1 et l'ensemble diélectrique de couches E1, sont les plus proche du substrat. La couche fonctionnelle métallique F3 et l'ensemble diélectrique de couches E4, sont les plus éloignés du substrat.

Le terme « au-dessus », respectivement « en-dessous », qualifiant la position d'une couche ou d'un ensemble de couches et défini relativement à la position d'une couche fonctionnelle, signifie que ladite couche ou ledit ensemble de couches est plus proche, respectivement plus éloigné, du substrat. Ces deux termes, « au-dessus » et « en-dessous », ne signifient nullement que la couche ou l'ensemble de couches qu'ils qualifient et la couche fonctionnelle par rapport à laquelle ils sont définis soient en contact. Ils n'excluent pas la présence d'autres couches intermédiaires entre ces deux couches. L'expression « en contact » est explicitement utilisée pour indiquer qu'aucune autre couche n'est disposée entre eux.

Le terme « extérieur », respectivement « intérieur », lorsqu'il qualifie une surface du substrat ou un paramètre optique ou physique d'une surface du substrat, désigne la surface du substrat orientée vers l'extérieur, respectivement vers l'intérieur, du local, par exemple un bâtiment ou un véhicule, dans lequel le substrat est utilisé.

Sans aucune précision ou qualificatif, le terme « épaisseur » utilisé pour une couche correspond à l'épaisseur physique, réel ou géométrique, e, de ladite couche. Elle est exprimée en nanomètres. L'expression « épaisseur optique » est utilisée pour indiquer explicitement l'épaisseur optique, notée e*₀*, d'une couche. Elle est définie par la relation e*₀* = *n**e où *n* est l'indice de réfraction de la couche et e son épaisseur physique, réelle ou géométrique. L'indice de réfraction des couches est mesuré à la longueur d'onde électromagnétique de 550nm. L'épaisseur optique est également exprimée en nanomètres.

L'expression « ensemble diélectrique de couches » désigne une ou plusieurs couches en contact les unes avec les autres formant un empilement globalement diélectrique, c'est-à-dire qu'il n'a pas les fonctions d'une couche fonctionnelle métallique. Si l'ensemble diélectrique comprend plusieurs couches, celles-ci peuvent elles-mêmes être diélectriques. L'épaisseur physique, réelle ou géométrique, respectivement l'épaisseur optique, d'un ensemble diélectrique de couches, correspond à la somme des épaisseurs physiques, réelles ou géométriques, respectivement des épaisseurs optiques, de chacune des couches qui le constituent.

Au sens de l'invention, une couche absorbante dans l'infrarouge est une couche qui absorbe majoritairement dans l'intervalle de longueurs d'onde allant d'environ 780 nm à 2500 nm.

Dans la présente description, l'expression « à base de », utilisée pour qualifier un matériau ou une couche quant à ce qu'il ou elle contient, signifie que la fraction massique du constituant qu'il ou elle comprend est d'au moins 50%, en particulier au moins 70%, de préférence au moins 90%.

La transmission lumineuse, la réflexion lumineuse, le facteur solaire et la sélectivité sont définis, mesurés et calculés en conformité avec les normes EN 410, EN 613, ISO 9050 et ISO 10292. La couleur est mesurée dans l'espace chromatique L*a*b* CIE 1976 selon la norme ISO 11664 avec un illuminant D65 et un champ visuel de 2° pour l'observateur de référence.

Un vitrage comprenant un matériau selon l'invention présente une réflexion lumineuse extérieure d'au moins 28%, une transmission lumineuse dans le spectre visible d'au moins 48%, une réflexion lumineuse intérieure égale ou inférieure à 23%, un facteur solaire d'au moins 25 et une sélectivité d'au moins 1,8. L'aspect esthétique du vitrage se caractérise par une couleur neutre en réflexion extérieure, en réflexion intérieure et en transmission. En particulier, les valeurs des paramètres a* et b* dans l'espace chromatique L*a*b* sont proches de 0, en particulier comprises entre -5 et 1.

Chaque ensemble diélectrique de couches comporte généralement au moins une couche à base d'un matériau diélectrique qui peut être à base de nitrures et/ou à base d'oxydes.

Les couches fonctionnelles métalliques sont des couches continues. Elles sont au nombre de trois. La fraction massique d'argent contenu dans les couches fonctionnelles métalliques à base d'argent est d'au moins 95%, de préférence au moins 98%.

Afin de réduire la quantité de matière déposée, les épaisseurs des couches fonctionnelles métalliques à base d'argent peuvent avantageusement être réduites, sans préjudice pour les performances thermiques et esthétiques tant que le rapport de l'épaisseur physique EF1 de la couche fonctionnelle métallique F1 sur l'épaisseur physique EF2 de la couche fonctionnelle métallique F2 reste compris entre 0,95 et 1,05, et l'épaisseur de la couche physique EF3 de la couche fonctionnelle métallique F3 reste supérieure aux épaisseurs physiques EF1 et EF2 des couches fonctionnelles F1 et F2.

Dans un mode de réalisation de l'invention, la somme des épaisseurs physiques des couches fonctionnelles F1, F2 et F3 est de préférence comprise entre 30nm et 36nm.

A titre d'exemples non limitatifs, chacune des épaisseurs physiques EF1 EF2 des couches fonctionnelles F1 et F2 peut être comprise entre 6nm et 12nm, de préférence entre 8nm et 11nm et l'épaisseur physique EF3 de la couche fonctionnelle F3 peut être comprise entre 10nm et 20nm, de préférence entre 12nm et 13nm.

Pour la même raison de réduction de la quantité de matière déposée, les épaisseurs des ensembles diélectriques de couches peuvent être réduites, sans préjudice pour les performances thermiques et esthétiques, tant que l'épaisseur optique EO2 de l'ensemble diélectrique de couche E2 est comprise entre 60 et 80nm, que l'épaisseur optique EO1 de l'ensemble diélectrique de couches E1 est comprise entre 200 et 250nm , et que les épaisseurs optiques EO1, EO2, EO3 et EO4 sont telles que EO2 < EO4 < EO3 < EO1.

A titre d'exemples non limitatif, l'épaisseur optique EO3 de l'ensemble diélectrique de couches E3 peut être comprise entre 150nm et 190nm. L'épaisseur optique EO4 de l'ensemble diélectrique de couches E4 peut être comprise entre 70nm et 90nm.

La couche absorbante du rayonnement infrarouge de l'ensemble diélectrique de couches E4 peut être à base de nitrure métallique. Par exemple, elle peut être à base de nitrure de nickel et chrome, de nitrure d'étain et zinc, de nitrure de titane ou encore de nitrure de titane.

Dans un mode de réalisation de l'invention, chacun des quatre ensembles diélectriques de couches comprend au moins une couche diélectrique à base d'un matériau choisi parmi le nitrure de silicium, le nitrure de titane, l'oxyde de zinc, l'oxyde d'étain et de zinc, l'oxyde de titane, l'oxyde de silicium, l'oxyde de titane et d'étain, seul ou en combinaison.

L'empilement peut également comprendre en outre une couche dite de blocage disposée au-dessus et en contact d'une couche fonctionnelle métallique à base d'argent. La fonction de cette couche, généralement de très faible épaisseur, est de protéger la couche d'argent lorsque le dépôt de la couche subséquente est réalisé dans une atmosphère oxydante ou lorsque certains éléments comme l'oxygène sont susceptibles de migrer d'une couche à l'autre lors d'un traitement thermique. S'il est nécessaire de protéger chaque couche d'argent, il est avantageux qu'une couche de blocage soit disposée au-dessus et en contact de chaque couche fonctionnelle à base d'argent que comprend l'empilement. Cette couche est de préférence à base des métaux ou alliages choisis parmi Ti et NiCr.

Il également possible de disposer une couche de blocage en-dessous et en contact d'une couche fonctionnelle métallique à base d'argent. S'il est nécessaire de protéger chaque couche d'argent, il peut être avantageux qu'une couche de blocage soit disposée en-dessous et en contact de chaque couche fonctionnelle métallique à base d'argent que comprend l'empilement.

Dans un mode de réalisation de l'invention, l'empilement de couches comprend en outre au moins une couche de blocage disposée au-dessus et en contact et/ou en-dessous et en contact d'une couche fonctionnelle métallique à base d'argent, l'épaisseur physique de la ou desdites couches à blocage étant égale ou inférieure à 5nm. A titre d'exemple non limitatif, la couche la couche de blocage est une couche métallique à base d'alliage NiCr.

Il peut être avantageux pour certaines applications que l'ensemble de l'empilement comporte une couche de protection afin de le protéger d'éventuelles altérations physico-chimiques par l'atmosphère ou l'environnement extérieur avec lesquels il est susceptible d'être en contact. En ce sens, l'empilement de couches peut comprendre en outre une couche de protection disposée au-dessus de sa surface susceptible d'être en contact avec l'atmosphère, l'épaisseur physique de ladite couche de protection étant égale ou inférieure à 5nm. A titre d'exemple non limitatif, la couche de protection peut être une couche à base d'alliage TiZr.

L'empilement peut comprendre en outre au moins une couche stabilisante dite de « contact inférieur » disposée en-dessous et en contact d'une couche fonctionnelle métallique à base d'argent. La fonction de cette couche, généralement de très faible épaisseur, est de favoriser l'adhésion et la cristallisation de l'argent. En ce sens il peut être avantageux qu'une telle couche soit disposée en-dessous et en contact de chaque une couche fonctionnelle métallique à base d'argent que comprend l'empilement. Cette couche est de préférence à base d'oxydes choisis parmi les oxydes de zinc, les oxydes de nickel, les oxydes de magnésium, les oxydes mixtes de zinc et d'étain, les oxydes mixtes de zinc et de magnésium, les oxydes mixtes de zinc et de titane.

Si une couche de blocage est présente en-dessous et en contact d'une couche fonctionnelle métallique à base d'argent, la couche de « contact inférieur » peut de préférence être disposée en-dessous et en contact de cette couche de blocage.

La couche de « contact inférieur » est considérées comme comprise dans l'ensemble diélectrique de couches qui est disposé sous la couche fonctionnelle métallique à base d'argent à laquelle elle se rapporte.

Les composés compris dans les couches de « contact inférieur », peuvent présenter des écarts à la stœchiométrie pour les teneurs en oxygène, en azote et/ou en autres éléments. Ils peuvent comprendre des éléments dopants, tel que l'aluminium pour l'oxyde de zinc.

Il n'est pas requis que les composés compris dans les couches des ensembles diélectriques de couches, dans les couches de blocage, dans les couches de « contact inférieur » ou dans les couches de protection, notamment ceux indiquées en exemple, soient parfaitement stœchiométriques. En particulier, ils peuvent présenter des écarts à la stœchiométrie pour les teneurs en oxygène, en azote et/ou en autres éléments tels que les éléments dopants.

Le substantif « stœchiométrie » et ses adjectifs dérivés doivent être interprétés selon le sens conventionnel du domaine technique. Il signifie notamment que les proportions des éléments chimiques constituant un composé correspondent à celles du « composé défini » tel que les diagrammes thermochimiques ou les conventions en vigueur dans le domaine technique le définissent.

Dans un premier mode préféré de réalisation de l'invention, l'empilement comprend en partant du substrat transparent :
- un premier ensemble diélectrique de couches dont l'épaisseur optique est comprise entre 200nm et 250nm et comprenant :
   a. une couche diélectrique à base de nitrure de silicium dont l'épaisseur optique est comprise entre 200nm et 230nm ;
   b. une couche de « contact inférieur » à base d'oxyde de zinc dont l'épaisseur optique est comprise entre 5 et 20nm ;
- une première couche de blocage métallique à base d'alliage nickel et chrome dont l'épaisseur physique est comprise entre 0,1nm et 5nm ;
- une première couche fonctionnelle métallique à base d'argent dont l'épaisseur physique est comprise entre 6nm et 12nm ;
- une deuxième couche de blocage métallique à base d'alliage nickel et chrome dont l'épaisseur physique est comprise entre 0,1nm et 5nm ;
- un deuxième ensemble diélectrique de couches dont l'épaisseur optique est comprise entre 60nm et 80 nm et comprenant :
   a. une couche diélectrique à base d'oxyde de zinc dont l'épaisseur optique est comprise entre 5nm et 15nm ;
   b. une couche diélectrique à base de nitrure de silicium dont l'épaisseur optique est comprise entre 50nm et 60nm ;
   c. une couche de « contact inférieur » à base d'oxyde de zinc dont l'épaisseur optique est comprise entre 5 et 15nm ;
- une troisième couche de blocage métallique à base d'alliage nickel et chrome dont l'épaisseur physique est comprise entre 0,1nm et 5nm ;
- une deuxième couche fonctionnelle métallique à base d'argent dont l'épaisseur physique est comprise entre 6nm et 12nm ;
- une quatrième couche de blocage métallique à base d'alliage nickel et chrome dont l'épaisseur physique est comprise entre 0,1nm et 5nm ;
- un troisième ensemble diélectrique de couches dont l'épaisseur optique est comprise entre 150nm et 190nm et comprenant :
   a. une couche diélectrique à base d'oxyde de zinc dont l'épaisseur optique est comprise entre 5nm et 20nm ;
   b. une couche diélectrique à base de nitrure de silicium dont l'épaisseur optique est comprise entre 120 et 140nm ;
   c. une couche diélectrique à base d'oxyde de zinc et d'étain dont l'épaisseur optique est comprise entre 10 et 20nm ;
   d. une couche de « contact inférieur » à base d'oxyde de zinc dont l'épaisseur optique est comprise entre 5 et 15nm ;
- une troisième couche fonctionnelle métallique à base d'argent dont l'épaisseur physique est comprise entre 10nm et 20nm ;
- une cinquième couche de blocage métallique à base d'alliage nickel et chrome dont l'épaisseur physique est comprise entre 0,1nm et 5nm ;
- un quatrième ensemble diélectrique de couches dont l'épaisseur optique est comprise entre 70nm et 90nm et comprenant :
   a. une couche diélectrique à base d'oxyde de zinc dont l'épaisseur optique est comprise entre 10nm et 20nm ;
   b. une couche diélectrique à base de nitrure de silicium dont l'épaisseur optique est comprise entre 60nm et 80nm ;
   c. une couche a une couche absorbante du rayonnement infrarouge à base de nitrure de nickel et chrome d'une épaisseur physique comprise entre 0,1nm et 5nm.

Dans un deuxième mode préféré de réalisation de l'invention, l'empilement est constitué en partant du substrat transparent :
- un premier ensemble diélectrique de couches dont l'épaisseur optique est comprise entre 200nm et 250nm et comprenant :
   a. une couche diélectrique à base de nitrure de silicium dont l'épaisseur optique est comprise entre 200nm et 230nm ;
   b. une couche de « contact inférieur » à base d'oxyde de zinc dont l'épaisseur optique est comprise entre 5 et 20nm ;
- une première couche de blocage métallique à base d'alliage nickel et chrome dont l'épaisseur physique est comprise entre 0,1nm et 5nm ;
- une première couche fonctionnelle métallique à base d'argent dont l'épaisseur physique est comprise entre 6nm et 12nm ;
- une deuxième couche de blocage métallique à base d'alliage nickel et chrome dont l'épaisseur physique est comprise entre 0,1nm et 5nm ;
- un deuxième ensemble diélectrique de couches dont l'épaisseur optique est comprise entre 60nm et 80 nm et comprenant :
   a. une couche diélectrique à base d'oxyde de zinc dont l'épaisseur optique est comprise entre 5nm et 15nm ;
   b. une couche diélectrique à base de nitrure de silicium dont l'épaisseur optique est comprise entre 50nm et 60nm ;
   c. une couche de « contact inférieur » à base d'oxyde de zinc dont l'épaisseur optique est comprise entre 5 et 15nm ;
- une troisième couche de blocage métallique à base d'alliage nickel et chrome dont l'épaisseur physique est comprise entre 0,1nm et 5nm ;
- une deuxième couche fonctionnelle métallique à base d'argent dont l'épaisseur physique est comprise entre 6nm et 12nm ;
- une quatrième couche de blocage métallique à base d'alliage nickel et chrome dont l'épaisseur physique est comprise entre 0,1nm et 5nm ;
- un troisième ensemble diélectrique de couches dont l'épaisseur optique est comprise entre 150nm et 190nm et comprenant :
   a. une couche diélectrique à base d'oxyde de zinc dont l'épaisseur optique est comprise entre 5nm et 20nm ;
   b. une couche diélectrique à base de nitrure de silicium dont l'épaisseur optique est comprise entre 120 et 140nm ;
   c. une couche diélectrique à base d'oxyde de zinc et d'étain dont l'épaisseur optique est comprise entre 10 et 20nm ;
   d. une couche de « contact inférieur » à base d'oxyde de zinc dont l'épaisseur optique est comprise entre 5 et 15nm ;
- une troisième couche fonctionnelle métallique à base d'argent dont l'épaisseur physique est comprise entre 10nm et 20nm ;
- une cinquième couche de blocage métallique à base d'alliage nickel et chrome dont l'épaisseur physique est comprise entre 0,1nm et 5nm ;
- un quatrième ensemble diélectrique de couches dont l'épaisseur optique est comprise entre 70nm et 90nm et comprenant :
   a. une couche diélectrique à base d'oxyde de zinc dont l'épaisseur optique est comprise entre 10nm et 20nm ;
   b. une couche diélectrique à base de nitrure de silicium dont l'épaisseur optique est comprise entre 60nm et 80nm ;
   c. une couche absorbante du rayonnement infrarouge à base de nitrure de nickel et chrome d'une épaisseur physique comprise entre 0,1nm et 5nm.

Le substrat transparent selon l'invention peut être un substrat minéral ou organique, rigide ou souple, plan ou bombé. Il sera de préférence incolore afin de minimiser l'absorption de la lumière et ainsi conserver une transmission lumineuse maximale.

Des exemples de substrats organiques pouvant être avantageusement utilisés pour la mise en œuvre de l'invention sont les matériaux polymères tels que les polyéthylènes, les polyesters, les polyacrylates, les polycarbonates, les polyuréthanes, les polyamides. Ces polymères peuvent être des polymères fluorés.

Des exemples de substrats minéraux pouvant être avantageusement mis en œuvre dans l'invention sont les feuilles de verre minéral ou vitrocéramique. Le verre est de préférence un verre de type silico-sodo-calcique, borosilicate, aluminosilicate ou encore alumino-boro-silicate.

Selon un mode de réalisation du matériau selon l'invention, l'empilement est déposé sur le substrat transparent à l'aide des méthodes classiques de dépôt connues de l'homme du métier. De préférence, l'empilement peut être déposée par la méthode de pulvérisation cathodique assistée par un champ magnétique (procédé magnétron).

Dans un mode particulier de réalisation de l'invention, le substrat transparent est une feuille de verre minéral.

Lorsque le substrat est une feuille de verre minérale, le matériau peut être soumis à un traitement thermique de trempe. Après le traitement thermique, une réflexion lumineuse extérieure d'au moins 28%, une transmission lumineuse dans le spectre visible d'au moins 48%, une réflexion lumineuse intérieure égale ou inférieure à 23%, un facteur solaire d'au moins 25, une sélectivité d'au moins 1,8, et des valeurs des paramètres a* et b* dans l'espace chromatique L*a*b* proches de 0, en particulier comprises entre -5 et 1.

Un exemple de traitement thermique consiste à chauffer le matériau à des températures comprises entre 550°C et 750°C pendant plusieurs minutes, puis à le refroidir rapidement sous air ou par tout autre moyen adapté. La durée pendant laquelle le matériau est chauffé varie en fonction de l'épaisseur de la feuille de verre. Les durées usuelles pour les feuilles de verre destinées au vitrage sont comprises entre 30 secondes et 5 minutes.

Lorsque le substrat transparent est une feuille de verre, le matériau selon l'invention peut alors être un élément d'un vitrage monolithique, feuilleté ou multiple.

Un vitrage monolithique comprend qu'une seule feuille de verre. Lorsque le matériau selon l'invention est utilisé comme vitrage monolithique, l'empilement est de préférence déposé sur la face de la feuille verre orientée vers l'intérieur de la pièce du bâtiment sur les murs de laquelle le vitrage est installé. Dans une telle configuration, il peut être avantageux de protéger l'empilement contre les dégradations physiques ou chimiques à l'aide d'un moyen approprié.

Un vitrage multiple comprend au moins deux feuilles de verre parallèles séparées par une lame de gaz isolant. La plupart des vitrages multiples sont des doubles ou triples vitrages, c'est-à-dire qu'ils comprennent respectivement deux ou trois vitrages. Lorsque le matériau selon l'invention est utilisé comme élément d'un vitrage multiple, l'empilement est de préférence déposé sur la face de la feuille verre orientée vers l'intérieur en contact avec le gaz isolant. Cette disposition a pour avantage de protéger l'empilement des dégradations chimiques ou physiques de l'environnement extérieur.

Un vitrage feuilleté comprend au moins deux feuilles de verre parallèles séparées par un feuillet intercalaire. Ce feuillet intercalaire est généralement un matériau organique, comme par exemple le polyvinylbutyral (PVB). Lorsque le matériau selon l'invention est utilisé comme élément d'un vitrage feuilleté, l'empilement peut être déposé sur une quelconque des faces de la feuille verre, que ces faces soient en contact avec le feuillet intercalaire ou non. Le dépôt de l'empilement sur la face de la feuille de verre en contact avec le feuillet intercalaire peut être avantageux pour le prémunir des dégradations chimiques ou physiques de l'environnement extérieur. Il faut cependant veiller à ce que les constituants du feuillet intercalaire ne soient pas de nature à interagir avec les couches de l'empilement et provoquer sa dégradation.

Un vitrage comprenant un matériau selon l'invention présente une couleur neutre en réflexion extérieure dans la gamme chromatique bleu ou bleu-vert. L'aspect visuel varie peu quel soit l'angle d'observation. Dans le système L*a*b*, la couleur du vitrage se caractérise de préférence, en réflexion externe, par une valeur pour le paramètre a* comprise entre -5 et 0 et une valeur du paramètre b* comprise entre -5 et 0.

Les caractéristiques et les avantages du matériau selon l'invention sont illustrés par les exemples décrits ci-après et les figures y afférentes
[Fig. 1] est une représentation schématique d'un premier mode de réalisation d'un matériau de l'invention.
[Fig. 2] est une représentation schématique d'un deuxième mode de réalisation d'un matériau selon l'invention.
[Fig. 3] est une représentation schématique d'un double vitrage comprenant un matériau selon l'invention.

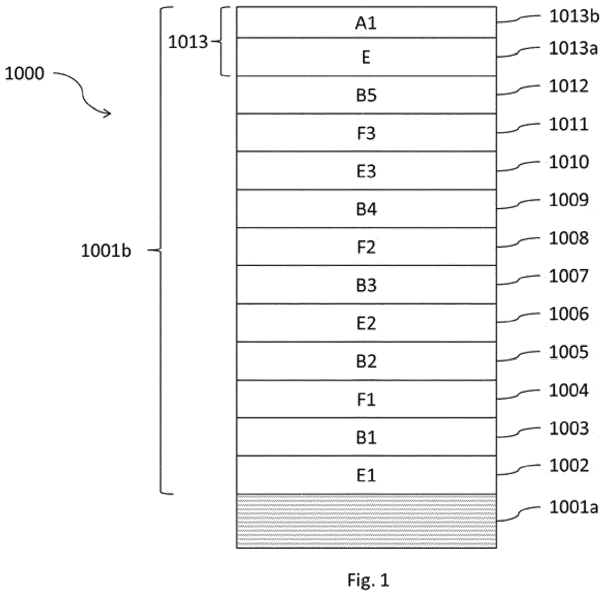

La figure 1 représente schématiquement un mode de réalisation du matériau de l'invention. Le matériau 1000 comprend un substrat transparent 1001a sur au moins une surface duquel est déposé un empilement de couches 1001b comprenant trois couches fonctionnelles métalliques 1004, 1008 et 1011 à base d'argent et quatre ensembles diélectriques de couches 1002, 1006, 1010 et 1013, chacune des couches fonctionnelles métalliques 1004, 1008 et 1011 à base d'argent étant disposée respectivement entre les deux ensembles diélectriques de couches, 1002 et 1006, 1006 et 1010, et 1010 et 1013. L'empilement peut en outre comprendre cinq couches de blocage 1003, 1005, 1007, 1009 et 1012. Une première couche de blocage 1003 est disposée en-dessous et en contact de la première couche fonctionnelle métallique 1004. Une deuxième couche de blocage 1005 est disposée au-dessus et en contact de la première couche fonctionnelle métallique 1004. Une troisième couche de blocage 1007 est disposée en-dessous et en contact de la deuxième couche fonctionnelle métallique 1008. Une quatrième couche de blocage 1009 est disposée au-dessus et en contact de la deuxième couche fonctionnelle métallique 1008. Une cinquième couche de blocage 1012 est disposée au-dessus et en contact de la troisième couche fonctionnelle métallique 1011. L'ensemble diélectrique de couches 1013 comprend une couche 1013b absorbant du rayonnement infrarouge et un ensemble diélectrique de couches 1013a.

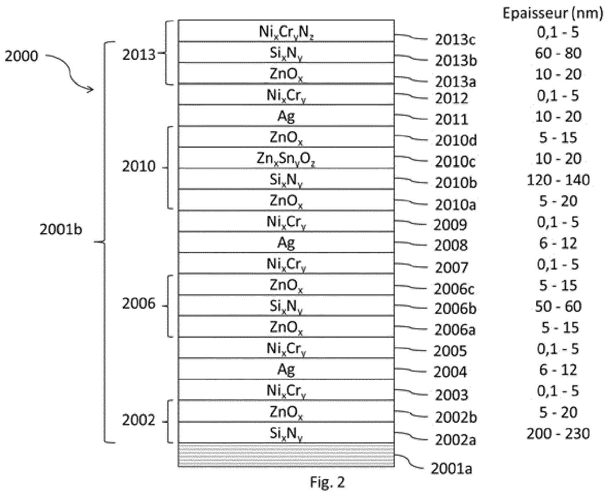

La figure 2 représente schématiquement un deuxième mode de réalisation du matériau de l'invention. Le matériau 2000 comprend un substrat transparent 2001a sur au moins une surface duquel est déposé un empilement de couches 2001b comprenant trois couches fonctionnelles métalliques 2004, 2008 et 2011 à base d'argent et quatre ensembles diélectriques de couches 2002, 2006, 2010 et 2013, chacune des couches fonctionnelles métalliques 2004, 2008 et 2011 à base d'argent étant disposée respectivement entre les deux ensembles diélectriques de couches, 2002 et 2006, 2006 et 2010, et 2010 et 2013. Sur la figure, les indices x, y et z associés aux éléments chimiques du matériau formant une couche correspondent aux rapports molaires de ces éléments dans le matériau formant la couche. Ces rapports peuvent être stœchiométriques, sous- ou sur- stœchiométriques. Par exemple, l'empilement 2001b peut comprendre en partant du substrat transparent 2001a:
- un premier ensemble diélectrique de couches 2002 dont l'épaisseur optique est comprise entre 200nm et 250nm et comprenant :
   a. une couche diélectrique 2002a à base de nitrure de silicium dont l'épaisseur optique est comprise entre 200nm et 230nm ;
   b. une couche de « contact inférieur » 2002b à base d'oxyde de zinc dont l'épaisseur optique est comprise entre 5 et 20nm ;
- une première couche de blocage métallique 2003 à base d'alliage nickel et chrome dont l'épaisseur physique est comprise entre 0,1nm et 5nm ;
- une première couche fonctionnelle métallique 2004 à base d'argent dont l'épaisseur physique est comprise entre 6nm et 12nm ;
- une deuxième couche de blocage métallique 2005 à base d'alliage nickel et chrome dont l'épaisseur physique est comprise entre 0,1nm et 5nm ;
- un deuxième ensemble diélectrique de couches 2006 dont l'épaisseur optique est comprise entre 60nm et 80 nm et comprenant :
   a. une couche diélectrique 2006a à base d'oxyde de zinc dont l'épaisseur optique est comprise entre 5nm et 15nm ;
   b. une couche diélectrique 2006b à base de nitrure de silicium dont l'épaisseur optique est comprise entre 50nm et 60nm ;
   c. une couche de « contact inférieur » 2006c à base d'oxyde de zinc dont l'épaisseur optique est comprise entre 5 et 15nm ;
- une troisième couche de blocage métallique 2007 à base d'alliage nickel et chrome dont l'épaisseur physique est comprise entre 0,1nm et 5nm ;
- une deuxième couche fonctionnelle métallique 2008 à base d'argent dont l'épaisseur physique est comprise entre 6nm et 12nm ;
- une quatrième couche de blocage métallique 2009 à base d'alliage nickel et chrome dont l'épaisseur physique est comprise entre 0,1nm et 5nm ;
- un troisième ensemble diélectrique de couches 2010 dont l'épaisseur optique est comprise entre 150nm et 190nm et comprenant :
   a. une couche diélectrique 2010a à base d'oxyde de zinc dont l'épaisseur optique est comprise entre 5nm et 20nm ;
   b. une couche diélectrique 2010b à base de nitrure de silicium dont l'épaisseur optique est comprise entre 120 et 140nm ;
   c. une couche diélectrique 2010c à base d'oxyde de zinc et d'étain dont l'épaisseur optique est comprise entre 10 et 20nm ;
   d. une couche de « contact inférieur » 2010d à base d'oxyde de zinc dont l'épaisseur optique est comprise entre 5 et 15nm ;
- une troisième couche fonctionnelle métallique 2011 à base d'argent dont l'épaisseur physique est comprise entre 10nm et 20nm ;
- une cinquième couche de blocage métallique 2012 à base d'alliage nickel et chrome dont l'épaisseur physique est comprise entre 0,1nm et 5nm ;
- un quatrième ensemble diélectrique de couches 2013 dont l'épaisseur optique est comprise entre 70nm et 90nm et comprenant :
   a. une couche diélectrique 2013a à base d'oxyde de zinc dont l'épaisseur optique est comprise entre 10nm et 20nm ;
   b. une couche diélectrique 2013b à base de nitrure de silicium dont l'épaisseur optique est comprise entre 60nm et 80nm ;
   c. une couche absorbante du rayonnement infrarouge 2013c à base de nitrure de nickel et chrome d'une épaisseur physique comprise entre 0,1nm et 5nm.
Les intervalles d'épaisseur sont indiqués pour chaque couche en face de la couche correspondante sur la figure 2. Les épaisseurs indiquées pour les couches formant les ensembles diélectriques correspondent aux épaisseurs optiques desdites couches. Les épaisseurs indiquées pour pour les couches fonctionnelles métalliques à base d'argent, les couches de blocage, les couches de « contact inférieur » et la couche de protection correspondent aux épaisseurs physiques, réelles ou géométriques des desdites couches.

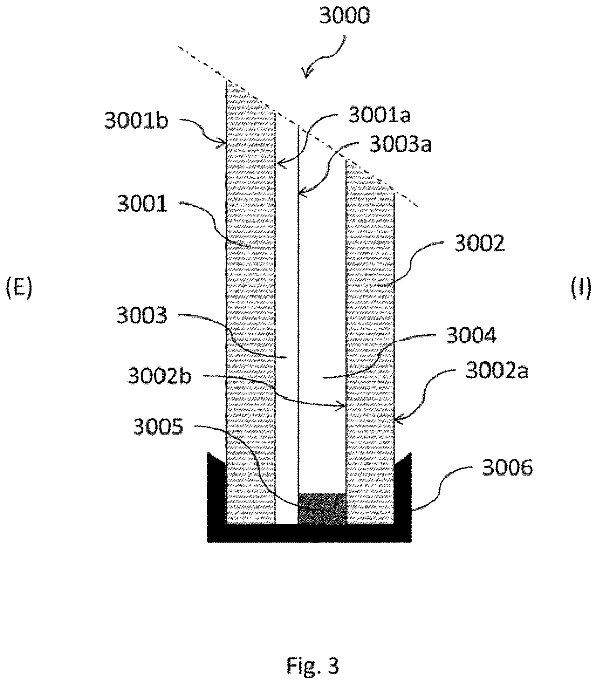

La figure 3 représente schématiquement d'une section transverse d'un double vitrage 3000 comprenant un matériau selon l'invention. Sur la figure, (E) correspond à l'extérieur du local où le vitrage est installé, et (I) à l'intérieur du vitrage. Le vitrage 3000 comprend une première feuille de verre 3001 avec une surface interne 3001a et une surface externe 3001b, une deuxième feuille de verre 3002 avec une surface interne 3002a et une surface externe 3002b, une lame de gaz isolant 3004, un espaceur 3005 et un joint de scellement 3006. La feuille de verre 3001 comprend, sur sa surface intérieure 3001a en contact avec le gaz de la lame de gaz isolant 3004, un empilement 3003 selon l'invention. L'empilement 3003 est disposé de sorte que sa surface externe 3003a qui est opposée à celle 3001a de la feuille de verre 3001 est orientée vers l'intérieur (I) du local, par exemple un bâtiment ou un véhicule, dans lequel le vitrage est utilisé.

A des fins d'illustration de l'effet technique propre à la présente invention, un exemple, Ex1, de matériau selon l'invention et quatre exemples comparatifs, CEx1, CEx2, CEx3 et CEx4, de matériaux, qui ne possèdent pas les caractéristiques des matériaux selon l'invention, ont été fabriqués. Ils sont décrits dans le tableau 1. Les empilements de couches ont été déposés sur un substrat transparent correspondant à une feuille de verre silico-sodo-calcique d'une épaisseur de 6 mm. Les conditions de dépôt de couches sont celles habituellement utilisées par l'homme du métier pour une pulvérisation cathodique assistée par un champ magnétique (procédé magnétron), et largement documentés dans la littérature, par exemple les demandes de brevet WO2012/093238 et WO2017/006029. Après dépôt des empilements sur les feuilles de verre silico-sodo-calcique d'une épaisseur de 6 mm, les matériaux obtenus ont été soumis à un traitement thermique de trempe. Ils ont été chauffés entre 650°C et 750°C pendant 4 à 6 minutes puis refroidis rapidement sous air.

L'exemple Ex1 de matériau selon l'invention correspond au mode de réalisation illustré par la figure 1.

Chacun de ces empilements de couches comprend :
- trois couches fonctionnelles métalliques à base d'argent, notées F1, F2 et F3 respectivement en partant du substrat ;
- quatre ensembles diélectrique de couches, notés E1, E2, E3 et E4 respectivement ;

Ils peuvent comprendre une ou plusieurs couches de blocage, notées Bi, où i représente le numéro de la couche.

Les valeurs du tableau 1 correspondent aux épaisseurs optiques totales pour les ensembles diélectriques, c'est-à-dire aux sommes des épaisseurs optiques des couches qui les constituent respectivement, et aux épaisseurs physiques, réelles ou géométriques pour les couches fonctionnelles métalliques à base d'argent, les couches de blocage, les couches de « contact inférieur » et la couche de protection.

Dans le tableau 1, pour des raisons de clarté, la couche absorbante du rayonnement infrarouge comprise dans l'ensemble diélectrique E4 de couches est représentée en-dehors du reste dudit ensemble E4. Elle est notée noté A1. L'épaisseur indiquée dans le tableau correspond à son épaisseur physique.

**[Tableaux 1]**

| ***Tableau 1*** | ***Ex1*** | ***CEx1*** | ***CEx2*** | ***CEx3*** | ***CEx4*** |
|---|---|---|---|---|---|
| ***A1*** | 0,4 | - | - | - | - |
| ***E4*** | 88 | 82,8 | 83,6 | 82,7 | 86,7 |
| ***B5*** | 0,3 | 0,1 | 0,25 | 0.25 | 0,2 |
| ***F3*** | 14,1 | 14 | 12,8 | 12,8 | 20,1 |
| ***E3*** | 167,3 | 161,8 | 167,3 | 171,6 | 178 |
| ***B4*** | 0,3 | 0,1 | 0,1 | 0.1 | 0,3 |
| ***F2*** | 8,6 | 9 | 10,5 | 10,3 | 5,2 |
| ***B3*** | 0,1 | 0,1 | 0,3 | 0,2 | 0,2 |
| ***E2*** | 74,3 | 76,8 | 76,8 | 76,8 | 125,8 |
| ***B2*** | 0,3 | 0,1 | 0,1 | 0.1 | 0,4 |
| ***F1*** | 8,6 | 9 | 10,5 | 10,3 | 9,4 |
| ***B1*** | 0,1 | 0,1 | 0,3 | 0,2 | 0,1 |
| ***E1*** | 223 | 162 | 144,6 | 144,8 | 92,4 |

Dans le tableau 2 sont reportées les valeurs de plusieurs paramètres permettant d'évaluer les performances optiques et thermiques des exemples de matériaux du tableau 1. Ces valeurs ont été mesurées sur un double vitrage comprenant les matériaux des exemples et comme illustrés sur la figure 3. Le double vitrage 3000 a la structure 6/16/4 suivante : une feuille de verre silico-sodo-calcique 3001 d'une épaisseur 6 mm / une lame de gaz isolant 3004 d'une épaisseur de 16mm contenant au moins 90% d'argon / une feuille de verre silico-sodo-calcique 3002 d'une épaisseur de 4 mm. L'empilement de couches 3003 est déposé sur la surface intérieure 3001a de la feuille de verre 3001 d'une épaisseur de 6 mm.

**[Tableaux 2]**

| ***Tableau 2*** | ***Ex1*** | ***CEx1*** | ***CEx2*** | ***CEx3*** | ***CEx4*** |
|---|---|---|---|---|---|
| **TL** | 49,7 | 50,6 | 53,2 | 55,5 | 50,2 |
| **a*T** | -3,6 | -2,9 | -4 | -4,4 | -3 |
| **b*T** | -1,7 | -0,4 | 1 | 2,7 | -0,3 |
| **Rext** | 29 | 29,2 | 30 | 26 | 30,6 |
| **a*Rext** | -3 | -0,5 | -0,8 | -3,5 | -0,8 |
| **b*Rext** | -2 | -2 | -1,5 | -6,7 | -2,9 |
| **Rint** | 20 | 24 | 27,5 | 22,2 | 29,5 |
| **a*Rint** | -2,6 | -7,7 | -6 | -9,7 | -4,2 |
| **b*Rint** | -3,3 | 2,3 | -0,9 | -10,3 | -1,7 |
| **9** | 27 | 29,4 | 30 | 29 | 30,5 |
| **s** | 1,8 | 1,7 | 1,8 | 1,8 | 1,8 |

La transmission lumineuse dans le spectre visible, *T_{L}*, le facteur solaire, *g*, et la sélectivité, *s*, et la réflexion interne, *Rint,* et la réflexion externes, *Rext,* dans le spectre visible sont définis, mesurés et calculés en conformité avec les normes EN 410, EN 613, ISO 9050 et ISO 10292. La couleur est mesurée dans l'espace chromatique L*a*b* CIE 1976 selon la norme ISO 11664 avec un illuminant D65 et un champ visuel de 2° pour l'observateur de référence.

Dans le tableau 2 :
- a*T et b*T sont les valeurs des paramètres a* et b* mesurées en transmission dans l'espace chromatique L*a*b* CIE 1976 avec un illuminant D65, un champ visuel de 2° pour l'observateur et un angle d'observation nul par rapport à la normale à la surface du vitrage ;
- Rext est la valeur de la réflexion lumineuse dans le spectre visible, exprimée en pourcentage, mesurée avec un illuminant D65, un champ visuel de 2° pour l'observateur sur la surface externe 3001b de la feuille de verre silico-sodo-calcique 3001 d'épaisseur 6mm dudit double vitrage 3000 ;
- a*Rext et b*Rext sont respectivement les valeurs des paramètres a* et b* mesurées en réflexion dans l'espace chromatique L*a*b* CIE 1976 avec un illuminant D65 et un champ visuel de 2° pour l'observateur sur la surface externe 3001b de la feuille de verre silico-sodo-calcique 3001 d'épaisseur 6 mm du double vitrage 3000 selon un angle d'observation nul par rapport à la normale à la surface du double vitrage 3000 ;
- Rint est la valeur de la réflexion lumineuse dans le spectre visible, exprimée en pourcentage, mesurée avec un illuminant D65, un champ visuel de 2° pour l'observateur sur la surface interne 3002a de la feuille de verre silico-sodo-calcique 3002 d'épaisseur 4 mm du double vitrage 3000 ;
- a*Rint et b*Rint sont respectivement les valeurs des paramètres a* et b* mesurées en réflexion dans l'espace chromatique L*a*b* CIE 1976 avec un illuminant D65 et un champ visuel de 2° pour l'observateur sur la surface interne 3002a de la feuille de verre silico-sodo-calcique 3002 d'épaisseur 4 mm du double vitrage 3000 selon un angle d'observation nul par rapport à la normale à la surface du double vitrage 3000 ;

L'exemple Ex1 de matériau selon l'invention présente une réflexion lumineuse extérieure d'au moins 28%, une transmission lumineuse dans le spectre visible d'au moins 48%, une réflexion lumineuse intérieure égale ou inférieure à 23%, un facteur solaire supérieur à 25 et une sélectivité d'au moins 1,8. L'aspect esthétique du vitrage se caractérise par une couleur neutre en réflexion extérieure, en réflexion intérieure et en transmission. En particulier, les valeurs des paramètres a* et b* dans l'espace chromatique L*a*b* est proche de 0, compris entre -5 et 0.

Les matériaux des contre-exemples CEx1, CEx2 et CEx 4 présentent une réflexion lumineuse intérieure supérieure à 23%. Pour les contre-exemples CEx1 et CEx2, les valeurs des paramètres a* et b* dans l'espace chromatique L*a*b* en réflexion intérieure sont éloignés de 0 et ne sont pas tous les deux compris entre -5 et 0. Le matériau du contre-exemple CEx3 présente une réflexion lumineuse intérieure inférieure à 23 et une réflexion lumineuse extérieure inférieure à 28%. Les valeurs des paramètres a* et b* dans l'espace chromatique L*a*b* en réflexion intérieure sont éloignés de 0 et ne sont tous les deux pas compris entre -5 et 0.

Ces résultats montrent que le matériau de l'invention possède à la fois de hautes performances thermiques et un aspect esthétique de surface brillant de couleur neutre.

Un exemple 3 correspondant à un mode détaillé de réalisation de l'exemple 1 du tableau 1 est décrit dans le tableau 3. Il est représenté schématiquement sur la figure 2. Les empilements ont été déposés sur un substrat transparent correspondant à une feuille de verre silico-sodo-calcique d'une épaisseur de 6 mm. Les conditions de dépôt de couches sont celles habituellement utilisées par l'homme du métier pour une pulvérisation cathodique assistée par un champ magnétique (procédé magnétron), et largement documentés dans la littérature, par exemple les demandes de brevet WO2012/093238 et WO2017/006029.

**[Tableaux 3]**

| ***Tableau 3*** | ***Matériau*** | ***Ex3*** |
|---|---|---|
| ***A1*** | NiCrN | 0,4 |
| ***E4*** | SiN | 36 |
| | ZnO | 5 |
| ***B5*** | NiCr | 0,3 |
| ***F3*** | Ag | 14,1 |
| ***E3*** | ZnO | 5 |
| | SnZnO | 8 |
| | SiN | 60 |
| | ZnO | 5 |
| ***B4*** | NiCr | 0,1 |
| ***F2*** | Ag | 8,6 |
| ***B3*** | NiCr | 0,3 |
| ***E2*** | ZnO | 5 |
| | SiN | 23,5 |
| | ZnO | 5 |
| ***B2*** | NiCr | 0,1 |
| ***F1*** | Ag | 8,6 |
| ***B1*** | NiCr | 0,1 |
| ***E1*** | ZnO | 5 |
| | SiN | 98 |

Les valeurs du tableau 3 correspondent aux épaisseurs physiques, rélles ou géométriques pour toutes les couches comprises dans les ensembles diélectriques, les couches fonctionnelles métalliques à base d'argent et les couches de blocage. Les couches de « contact inférieur » sont comprises dans les ensembles diélectriques.

Les indices de réfraction des couches des ensembles diélectrique ont été mesurés à la longueur d'onde électromagnétique de 550nm. L'épaisseur optique d'un ensemble diélectrique correspond à la somme des épaisseurs optiques des couches qui le forment. Pour l'exemple Ex3, les épaisseurs optiques EO1, EO2, EO3 et EO4, des ensembles diélectriques de couches E1, E2, E3 et E3 du tableau 3 sont respectivement 223nm, 74nm, 167nm et 88nm.

L'exemple Ex3 du tableau 3 permet d'atteindre les performances thermiques et esthétiques recherchées. La réflexion lumineuse extérieure d'au moins 28%, une transmission lumineuse dans le spectre visible d'au moins 48%, une réflexion lumineuse intérieure égale ou inférieure à 23%, un facteur solaire supérieur à 25 et une sélectivité d'au moins 1,8. L'aspect esthétique du vitrage se caractérise par une couleur neutre en réflexion extérieure, en réflexion intérieure et en transmission. En particulier, les valeurs des paramètres a* et b* dans l'espace chromatique L*a*b* est proche de 0, compris entre -5 et 0.

## Revendications

1. Matériau comprenant un substrat transparent sur au moins une surface duquel est déposé un empilement de couches comprenant, à partir du substrat, trois couches fonctionnelles métalliques, F1, F2 et F3, à base d'argent, d'épaisseurs physiques EF1, EF2 et EF3 respectivement, et quatre ensembles diélectriques de couches, E1, E2, E3 et E4 d'épaisseurs optiques sont EO1, EO2, EO3 et EO4 respectivement, chacune des couches fonctionnelles métalliques F1, F2 et F3 à base d'argent étant disposée respectivement entre les deux ensembles diélectriques de couches, E1 et E2, E2 et E3, et E3 et E4, ledit matériau étant **caractérisé en ce que** :
- le rapport de l'épaisseur physique EF1 de la couche fonctionnelle métallique F1 sur l'épaisseur physique EF2 de la couche fonctionnelle métallique F2 est compris entre 0,95 et 1,05 ;
- l'épaisseur de la couche physique EF3 de la couche fonctionnelle métallique F3 est supérieure aux épaisseurs physiques EF1 et EF2 des couches fonctionnelles F1 et F2 ;
- l'épaisseur optique EO2 de l'ensemble diélectrique de couches E2 est comprise entre 60 et 80nm ;
- l'épaisseur optique EO1 de l'ensemble diélectrique de couches E1 est comprise entre 200 et 250nm ;
- les épaisseurs optiques EO1, EO2, EO3 et EO4 sont telles que EO2 < EO4 < EO3 < EO1;
- l'ensemble diélectrique de couche E4 comprend au moins une couche absorbante du rayonnement infrarouge d'une épaisseur physique comprise entre 0,1nm et 5nm.

2. Matériau selon la revendication 1, tel que chacune des épaisseurs physiques EF1 et EF2 des couches fonctionnelles F1 et F2 est comprise entre 6nm et 12nm, de préférence entre 8nm et 11nm.

3. Matériau selon l'une quelconque des revendications 1 à 2, tel que l'épaisseur physique EF3 de la couche fonctionnelle F3 est comprise entre 10nm et 20nm, de préférence entre 12nm et 13nm.

4. Matériau selon l'une quelconque des revendications 1 à 3, tel que la somme des épaisseurs physiques des couches fonctionnelles F1, F2 et F3 est comprise entre 30nm et 36nm.

5. Matériau selon l'une quelconque des revendications 1 à 4, tel que l'épaisseur optique EO3 de l'ensemble diélectrique de couches E3 est comprise entre 150nm et 190nm

6. Matériau selon l'une quelconque des revendications 1 à 6, tel que l'épaisseur optique EO4 de l'ensemble diélectrique de couches E4 est comprise entre 70 et 90nm.

7. Matériau selon l'une quelconque des revendications 1 à 7, tel que la couche absorbante du rayonnement infrarouge de l'ensemble diélectrique de couches E4 est à base de nitrure métallique.

8. Matériau selon l'une quelconque des revendications 1 à 8, tel que chacun des quatre ensembles diélectriques de couches comprend au moins une couche diélectrique à base d'un matériau choisi parmi le nitrure de silicium, le nitrure de titane, l'oxyde de zinc, l'oxyde d'étain et de zinc, l'oxyde de titane, l'oxyde de silicium, l'oxyde de titane et d'étain, seul ou en combinaison.

9. Matériau selon l'une quelconque des revendications 1 à 9, tel que l'empilement de couches comprend en outre au moins une couche de blocage disposée au-dessus et en contact et/ou en-dessous et en contact d'une couche fonctionnelle métallique à base d'argent, l'épaisseur physique de la ou desdites couches à blocage étant égale ou inférieure à 5nm.

10. Matériau selon la revendication 9, tel que la couche de blocage est une couche métallique à base d'alliage NiCr.

11. Matériau selon l'une quelconque des revendications 1 à 10, tel que l'empilement de couches comprend en outre une couche de protection disposée au-dessus dudit empilement de couches, l'épaisseur physique de ladite couche de protection étant égale ou inférieure à 5nm.

12. Matériau selon la revendication 11, tel que la couche de protection est une couche à base d'alliage TiZr.

13. Matériau selon l'une quelconque des revendications 1 à 12, tel que le substrat transparent est une feuille de verre.

14. Matériau selon la revendication 13, tel qu'après un traitement thermique de trempe, ledit matériau présente une réflexion lumineuse extérieure d'au moins 28%, une transmission lumineuse dans le spectre visible d'au moins 48%, une réflexion lumineuse intérieure égale ou inférieure à 23%, une sélectivité d'au moins 1,8, et des valeurs des paramètres a* et b* dans l'espace chromatique L*a*b* sont proches de 0, en particulier comprises entre -5 et 1.

15. Vitrage comprenant un matériau selon l'une quelconque des revendications 1 à 14.

## Patentansprüche

1. Material, umfassend ein transparentes Substrat, auf dessen mindestens einer Oberfläche ein Schichtstapel aufgebracht ist, der ausgehend von dem Substrat drei metallische Funktionsschichten F1, F2 und F3 auf Silberbasis mit den physikalischen Dicken EF1, EF2 bzw. EF3 und vier dielektrische Schichtanordnungen E1, E2, E3 und E4 mit optischen Dicken EO1, EO2, EO3 bzw. EO4 umfasst, wobei jede der metallischen Funktionsschichten F1, F2 und F3 auf Silberbasis jeweils zwischen den beiden dielektrischen Schichtanordnungen E1 und E2, E2 und E3 sowie E3 und E4 angeordnet ist, wobei das Material
**dadurch gekennzeichnet ist, dass:**
- das Verhältnis der physikalischen Dicke EF1 der metallischen Funktionsschicht F1 zur physikalischen Dicke EF2 der metallischen Funktionsschicht F2 zwischen 0,95 und 1,05 liegt;
- die Dicke der physikalischen Schicht EF3 der metallischen Funktionsschicht F3 größer ist als die physikalischen Dicken EF1 und EF2 der Funktionsschichten F1 und F2;
- die optische Dicke EO2 der dielektrischen Schichtanordnung E2 zwischen 60 und 80 nm liegt;
- die optische Dicke EO1 der dielektrischen Schichtanordnung E1 zwischen 200 und 250 nm liegt;
- die optischen Dicken EO1, EO2, EO3 und EO4 derart sind, dass EO2 < EO4 < EO3 < EO1;
- die dielektrische Schichtanordnung E4 mindestens eine Infrarotstrahlung absorbierende Schicht mit einer physikalischen Dicke zwischen 0,1 nm und 5 nm umfasst.

2. Material nach Anspruch 1, derart, dass jede der physikalischen Dicken EF1 und EF2 der Funktionsschichten F1 und F2 zwischen 6 nm und 12 nm, vorzugsweise zwischen 8 nm und 11 nm, liegt.

3. Material nach einem der Ansprüche 1 bis 2, derart, dass die physikalische Dicke EF3 der Funktionsschicht F3 zwischen 10 nm und 20 nm, vorzugsweise zwischen 12 nm und 13 nm, liegt.

4. Material nach einem der Ansprüche 1 bis 3, derart, dass die Summe der physikalischen Dicken der Funktionsschichten F1, F2 und F3 zwischen 30 nm und 36 nm liegt.

5. Material nach einem der Ansprüche 1 bis 4, derart, dass die optische Dicke EO3 des dielektrischen Schichtaufbaus E3 zwischen 150 nm und 190 nm liegt.

6. Material nach einem der Ansprüche 1 bis 6, derart, dass die optische Dicke EO4 der dielektrischen Schichtanordnung E4 zwischen 70 und 90 nm liegt.

7. Material nach einem der Ansprüche 1 bis 7, derart, dass die Infrarotstrahlung absorbierende Schicht der dielektrischen Schichtanordnung E4 auf Metallnitrid basiert.

8. Material nach einem der Ansprüche 1 bis 8, derart, dass jede der vier dielektrischen Schichtanordnungen mindestens eine dielektrische Schicht auf der Basis eines Materials umfasst, das aus Siliziumnitrid, Titannitrid, Zinkoxid, Zinn-Zink-Oxid, Titanoxid, Siliziumoxid, Titan-Zinn-Oxid, einzeln oder in Kombination, ausgewählt ist.

9. Material nach einem der Ansprüche 1 bis 9, derart, dass der Schichtstapel ferner mindestens eine Sperrschicht umfasst, die über und in Kontakt und/oder unter und in Kontakt mit einer metallischen Funktionsschicht auf Silberbasis angeordnet ist, wobei die physikalische Dicke der Sperrschicht(en) 5 nm oder weniger beträgt.

10. Material nach Anspruch 9, derart, dass die Sperrschicht eine Metallschicht auf der Basis einer NiCr-Legierung ist.

11. Material nach einem der Ansprüche 1 bis 10, derart, dass der Schichtstapel ferner eine Schutzschicht umfasst, die über dem Schichtstapel angeordnet ist, wobei die physikalische Dicke der Schutzschicht gleich oder kleiner als 5 nm ist.

12. Material nach Anspruch 11, derart, dass die Schutzschicht eine Schicht auf der Basis einer TiZr-Legierung ist.

13. Material nach einem der Ansprüche 1 bis 12, derart, dass das transparente Substrat eine Glasfolie ist.

14. Material nach Anspruch 13, derart, dass das Material nach einer Wärmebehandlung zum Abschrecken eine äußere Lichtreflexion von mindestens 28 %, eine Lichtdurchlässigkeit im sichtbaren Spektrum von mindestens 48 %, eine innere Lichtreflexion gleich oder kleiner 23 %, eine Selektivität von mindestens 1,8 aufweist und die Werte der Parameter a* und b* im Farbraum L*a*b* nahe bei 0, insbesondere zwischen -5 und 1 liegen.

15. Verglasung, die ein Material nach einem der Ansprüche 1 bis 14 umfasst.

## Claims

1. A material comprising a transparent substrate, on at least one surface of which is deposited a stack of layers comprising, from the substrate, three silver-based functional metal layers, F1, F2 and F3, with physical thicknesses EF1, EF2 and EF3 respectively, and four dielectric assemblies of layers, E1, E2, E3 and E4, with optical thicknesses are EO1, EO2, EO3 and EO4 respectively, each of the silver-based functional metal layers, F1, F2 and F3, being positioned respectively between the two dielectric assemblies of layers, E1 and E2, E2 and E3, and E3 and E4, said material being **characterized in that**:
- the ratio of the physical thickness EF1 of the functional metal layer F1 to the physical thickness EF2 of the functional metal layer F2 is between 0.95 and 1.05;
- the thickness of the physical layer EF3 of the functional metal layer F3 is greater than the physical thicknesses EF1 and EF2 of the functional layers F1 and F2;
- the optical thickness EO2 of the dielectric assembly of layers E2 is between 60 and 80 nm;
- the optical thickness EO1 of the dielectric assembly of layers E1 is between 200 and 250 nm;
- the optical thicknesses EO1, EO2, EO3 and EO4 are such that EO2 < EO4 < EO3 < EO1;
- the dielectric assembly of layers E4 comprises at least one layer which absorbs infrared radiation with a physical thickness of between 0.1 nm and 5 nm.

2. The material as claimed in claim 1, such that each of the physical thicknesses EF1 and EF2 of the functional layers F1 and F2 is between 6 nm and 12 nm, preferably between 8 nm and 11 nm.

3. The material as claimed in either one of claims 1 and 2, such that the physical thickness EF3 of the functional layer F3 is between 10 nm and 20 nm, preferably between 12 nm and 13 nm.

4. The material as claimed in any one of claims 1 to 3, such that the sum of the physical thicknesses of the functional layers F1, F2 and F3 is between 30 nm and 36 nm.

5. The material as claimed in any one of claims 1 to 4, such that the optical thickness EO3 of the dielectric assembly of layers E3 is between 150 nm and 190 nm.

6. The material as claimed in any one of claims 1 to 6, such that the optical thickness EO4 of the dielectric assembly of layers E4 is between 70 nm and 90 nm.

7. The material as claimed in any one of claims 1 to 7, such that the layer which absorbs infrared radiation of the dielectric assembly of layers E4 is based on metal nitride.

8. The material as claimed in any one of claims 1 to 8, such that each of the four dielectric assemblies of layers comprises at least one dielectric layer based on a material chosen from silicon nitride, titanium nitride, zinc oxide, zinc tin oxide, titanium oxide, silicon oxide or titanium tin oxide, alone or in combination.

9. The material as claimed in any one of claims 1 to 9, such that the stack of layers additionally comprises at least one blocking layer positioned above and in contact and/or below and in contact with a silver-based functional metal layer, the physical thickness of said blocking layer or layers being equal to or less than 5 nm.

10. The material as claimed in claim 9, such that the blocking layer is a metal layer based on NiCr alloy.

11. The material as claimed in any one of claims 1 to 10, such that the stack of layers additionally comprises a protective layer positioned above said stack of layers, the physical thickness of said protective layer being equal to or less than 5 nm.

12. The material as claimed in claim 11, such that the protective layer is a layer based on TiZr alloy.

13. The material as claimed in any one of claims 1 to 12, such that the transparent substrate is a glass sheet.

14. The material as claimed in claim 13, such that, after a tempering heat treatment, said material exhibits an external light reflection of at least 28%, a light transmission in the visible spectrum of at least 48%, an internal light reflection equal to or less than 23%, a selectivity of at least 1.8, and values of the a* and b* parameters in the L*a*b* chromatic space are close to 0, especially of between -5 and 1.

15. A glazing comprising a material as claimed in any one of claims 1 to 14
